# EUROPEAN PATENT SPECIFICATION

(11) **EP 4 162 230 B1**
(45) Date of publication and mention of the grant of the patent: **27.05.2026**
(21) Application number: 21792491.9
(22) Date of filing: 20.04.2021
(51) Int. Cl.: G01B 11/02, G01B 9/02, G02B 5/18, G02B 27/00, G02B 27/10, G06T 7/521, G01B 11/25, G01C 3/06, G02B 27/42, G02B 27/09

(54) **DIFFRACTIVE OPTICAL ELEMENT WITH COLLIMATOR FUNCTION, METHOD AND MACHINE-READABLE STORAGE MEDIUM**
DIFFRAKTIVES OPTISCHES ELEMENT MIT KOLLIMATORFUNKTION, VERFAHREN UND MASCHINENLESBARES SPEICHERMEDIUM
ÉLÉMENT OPTIQUE DIFFRACTIF DOTÉ D'UNE FONCTION DE COLLIMATION, PROCÉDÉ ET SUPPORT DE STOCKAGE PAR MACHINE NON TRANSITOIRE

(30) Priority: 21.04.2020 US 202063013002 P
(43) Date of publication of application: 12.04.2023
(73) Proprietor: Magik Eye Inc., New York, New York 10016 (US)
(72) Inventor: KIMURA, Akiteru, Hachioji-shi Tokyo, 192--0046 (JP); TSAI, Chao-Hsu, Hsinchu City, 30051 (TW)
(74) Representative: Marks & Clerk LLP
(86) International application number: PCT/US2021/028124
(87) International publication number: WO 2021/216528

(56) References cited:
- WO-A1-2007/043036
- WO-A1-2019/200289
- JP-A- 2012 098 548
- US-A1- 2016 025 993
- US-A1- 2016 377 414
- US-A1- 2018 292 200
- US-A1- 2019 249 984
- US-B1- 10 317 684
- US-B1- 10 509 128
- US-B1- 9 826 216

## Description

This application claims the priority of United States Provisional Patent Application Serial No. 63/013,002, filed April 21, 2020.

### FIELD OF THE INVENTION

The invention related generally to distance measurement, and relates more particularly to distance sensors including diffractive optical elements with collimator functions.

### BACKGROUND

Many techniques, including autonomous navigation, robotics, and other applications, rely on the measurement of a three-dimensional map of a surrounding space to help with collision avoidance, route confirmation, and other tasks. For instance, the three-dimensional map may indicate the distance to various objects in the surrounding space.

In some examples, a sensor used to measure distance may project a pattern of light (e.g., infrared light) onto the surface of the object whose distance is being measured. The pattern of light may comprise a plurality of discrete points of light, where each point of light is created as a single beam of light emitted from the distance sensor is incident upon the surface of the object. The distance to the object may then be calculated based on the appearance of the pattern. In some examples, the plurality of beams of light used to create the pattern is created by using a diffractive optical element to split a single beam of coherent light emitted by the distance sensor's light projecting system into a plurality of beams of light.

US 2016/0025993 A1, US 2016/377414 A1 and US 2018/0292200 A1 disclose an optoelectronic device that includes an array of optical emitters, a projection lens, and a diffractive optical element. The projection lens is configured to collect and focus limit emitted by the optical emitters so as to project optical beams containing a light pattern corresponding to the two-dimensional pattern of the optical emitters, and the DOE is configured to produce and project multiple overlapping replicas of the pattern.

US 10317684 B1 discloses an optical projector with a pattern-generating optical element, and a multiple beam grating to duplicate the pattern multiple times to provide a multiple pattern image.

### SUMMARY

Aspects of the present invention provide a distance sensor, method, and non-transitory machine-readable storage medium, as set out by the appended set of claims.

### BRIEF DESCRIPTION OF THE DRAWINGS

FIG. 1 is a schematic diagram illustrating the light projecting system of an example distance sensor according to examples of the present disclosure;
FIG. 2 illustrates a pattern of light that may be formed by the light projecting system of FIG. 1;
FIG. 3A illustrates a photo of a portion of a surface of an example diffractive optical element including a collimator function, according to the present disclosure;
FIG. 3B illustrates a cross sectional view of the surface of FIG. 3A;
FIG. 4 is a schematic diagram illustrating the light projecting system of another example distance sensor according to examples of the present disclosure;
FIG. 5 is a simplified schematic drawing illustrating an example distance sensor in which examples of the disclosed diffractive optical element including the collimator function may be employed;
FIG. 6 is a flow chart illustrating an example method for measuring the distance from a distance sensor to an object; and
FIG. 7 depicts a high-level block diagram of an example electronic device for measuring the distance from a distance sensor to an object.

### DETAILED DESCRIPTION

The present disclosure broadly describes a diffractive optical element including a collimator function for use in distance measurement and other optical applications. As discussed above, a sensor used to measure distance may project a pattern of light (e.g., infrared light) onto the surface of the object whose distance is being measured. The pattern of light may comprise a plurality of discrete points of light, where each point of light is created as a single beam of light emitted from the distance sensor is incident upon the surface of the object. The distance to the object may then be calculated based on the appearance of the pattern. In some examples, the plurality of beams of light used to create the pattern is created by using a diffractive optical element to split a single beam of coherent light emitted by the distance sensor's light projecting system into a plurality of beams of light. United States Patent Applications Serial Nos. 14/920,246, 15/149,323, and 15/149,429, for example, distance sensors that include diffractive optical elements for splitting beams of coherent light.

Coherent light projected from an emitter of a semiconductor laser will typically exhibit some degree of beam divergence, i.e., an increase in beam diameter or radius with distance from the source of the light. The increase in beam diameter or radius may comprise an angular measure referred to as a "divergence angle." Conventional techniques for adjusting the divergence angle involve using a collimator lens to adjust the divergence angle either before or after the beam is split by the diffractive optical element.

Moreover, many conventional distance sensors also utilize vertical cavity surface emitting laser (VCSEL) light sources to produce the beams of light. Some designs may employ a single VCSEL emitter, while other designs may employ an array in which multiple VCSEL emitters are densely arranged. Where an array of VCSEL emitters is employed, the projection directions of the individual emitters will be parallel to each other, and the beam emitted from each emitter will have a certain spread angle (i.e., increase of width of beam with distance from the emitter). Therefore, in order to project the light emitted by the VCSEL array with a defined size according to arrangement of the emitters, it may be necessary to project the light at a constant magnification (spread angle).

For instance, in a distance sensor configuration in which a collimator lens is positioned between a VCSEL array and a diffractive optical element (i.e., where the divergence angles of the beams of coherent light are adjusted before the beams are split), the collimator lens will not just control the divergence angle of each beam, but at the same time will also enlarge and project the pattern created by the plurality of beams. In a distance sensor configuration using a single VCSEL emitter (or a single edge emitting laser (EEL), the beam of coherent light emitted by the emitter may similarly be shaped to exhibit the desired spread angle (e.g., parallel light) by a collimator lens prior to being split by the diffractive optical element to form the desired pattern.

In a distance sensor configuration in which the diffractive optical element is positioned between a single VCSEL emitter and the collimator lens, the diffractive optical element will split the beam of coherent light emitted by the VCSEL emitter into a plurality of beams of light, and then the collimator lens may shape the plurality of beams of light to exhibit an arbitrary spread angle (e.g. parallel light) that is projected onto a surface. In this case, the patterns created by the diffractive optical element (which may exhibit respective divergence angles) may be made parallel to each other by the collimator lens. Where an array of VCSEL emitters is used in place of a single VCSEL emitter, the spread angle of each beam of light that exits the diffractive optical element may be shaped by the position of the collimator lens and the optical power of the collimator lens (i.e., the degree to which the collimator lens converges the light). At the same time, the enlarged projection specification of the VCSEL array may also be defined by the position and optical power of the collimator lens.

Examples of the present disclosure employ a diffractive optical element that includes a collimator function, essentially combining the functions of the diffractive optical element and the collimator lens into a single component. This reduces the total number of components needed to control projection of a pattern of light for distance sensing applications, which in turn allows the size and manufacturing costs of the equipment to be reduced. Previous attempts to combine the functionality of a diffractive optical element and a collimator lens have employed diffraction patterns that employ sloped surfaces (e.g., Fresnel slopes) which are difficult to fabricate and result in a phase distribution that is not optimized in terms of diffraction efficiency, noise, and pattern uniformity. By contrast, in one example, the combined functionality is achieved by creating a step-like diffraction pattern on the surface of the diffractive optical element, in the same plane as the beam splitting pattern. Examples of the step-like pattern comprise a plurality of layers of a binary step diffraction pattern without sloping surfaces. The proposed patterning of the disclosed diffractive optical element is both easier to fabricate than a sloped diffraction grating and better optimized for diffraction efficiency, noise, and pattern uniformity.

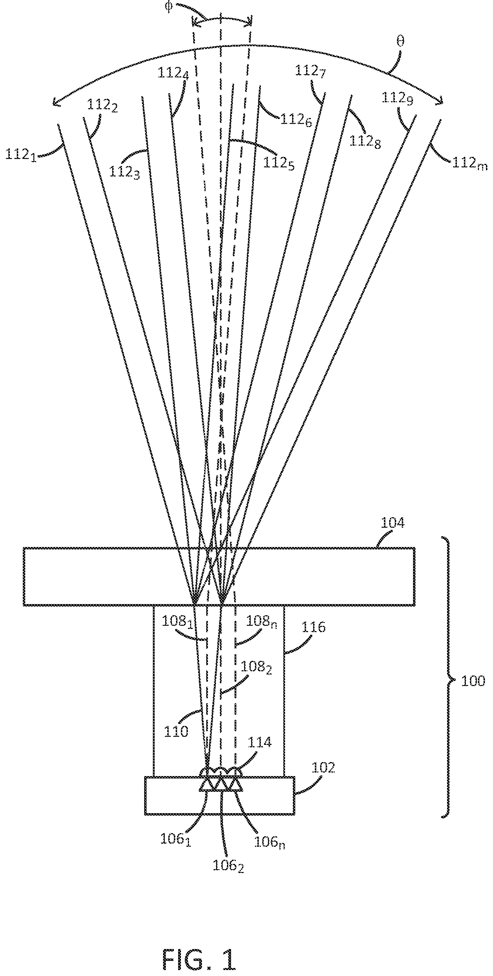

FIG. 1 is a schematic diagram illustrating the light projecting system 100 of an example distance sensor according to examples of the present disclosure. In other words, FIG. 1 illustrates the portion of a distance sensor that projects a pattern of light from which distance can be calculated, but omits other components of the distance sensor such as a light receiving system and processor for capturing images of the pattern of light and calculating distance based on the images.

As shown in FIG. 1, the light projecting system 100 of the example distance sensor generally includes an emitter 102 and a diffractive optical element 104. In one example, the emitter 102 comprises a VCSEL emitter. The VCSEL emitter may more specifically comprise an array of individual VCSEL emitters 106₁-106ₙ (hereinafter individually referred to as a "VCSEL emitter 106" or collectively referred to as "VCSEL emitters 106"). Each VCSEL emitter 106 may comprise a laser light source that is capable of emitting a beam of light in a wavelength that is invisible to the human eye, but visible to a light receiving system of the example distanced sensor (e.g., infrared light).

FIG. 1 illustrates, for each of the VCSEL emitters 106, a respective central light emitting axis 108₁-108ₙ (hereinafter individually referred to as an "axis 108" or collectively referred to as "axes 108"). In addition, FIG. 1 illustrates a beam 110 of coherent light emitted from the VCSEL emitter 106₁. The VCSEL emitters 106₂ and 106ₙ may emit beams of coherent light in a similar manner; however, such beams are not illustrated in FIG. 1 for the sake of simplicity. In one example, a microlens 114 may optionally be positioned over the emitter 102.

The diffractive optical element 104 is positioned between the emitter 102 and an exit aperture (not shown) of the light projecting system 100 via which the emitted light exits the distance sensor. In addition, a positioning member 116 may be employed to maintain a strictly aligned positional relationship between the emitter 102 and the diffractive optical element 104 with high accuracy. In one example, the positioning member 116 is formed from a plastic or polymer, such as a liquid crystal polymer, to facilitate precision molding.

In one example, the diffractive optical element 104 includes a collimator function as described in further detail below. That is, in addition to splitting each beam of coherent light (e.g., similar to beam 110) emitted by the emitter 102 into a plurality of beams of light, the diffractive optical element 104 may also shape the plurality of beams of light to exhibit an arbitrary spread angle θ that is projected onto a surface. The diffractive optical element 104 may also perform a magnification function indicated by the angle φ in FIG. 1. In one example, the optical power of the diffractive optical element 104 is similar to the optical power of a convex lens. That is, the diffractive optical element 104 may control the divergence angle of the beams of light projected by the emitter 102 and may also enlarge the pattern projected when the emitter 102 comprises an array of VCSEL emitters.

For instance, as illustrated in FIG. 1, the beam 110 of coherent light may be emitted by the VCSEL emitter 106₁. When the beam 110 of coherent light enters the diffractive optical element 104, the diffractive optical element 104 will split the beam 110 of coherent light into a plurality of beams 112₁-112ₘ (hereinafter individually referred to as a "beam 112" or collectively referred to as "beams 112") of light. Furthermore, because the diffractive optical element 104 has been configured to perform a collimator function as well, the diffractive optical element 104 will shape the plurality of beams 112 to exhibit the spread angle θ. In one example, shaping of the plurality of beams 112 by the diffractive optical element 104 may result in some of the beams 112 being oriented substantially parallel (i.e., parallel within some predefined tolerance) to each other. For instance, as illustrated in FIG. 1, beams 112₁ and 112₂ are parallel to each other; beams 112₃ and 112₄ are parallel to each other; beams 112₅ and 112₆ are parallel to each other; beams 112₇ and 112₈ are parallel to each other; and beams 112₉ and 112ₘ are parallel to each other. Beams of coherent light emitted by the VCSEL emitters 106₂ and 106ₙ may be split and shaped in a similar manner.

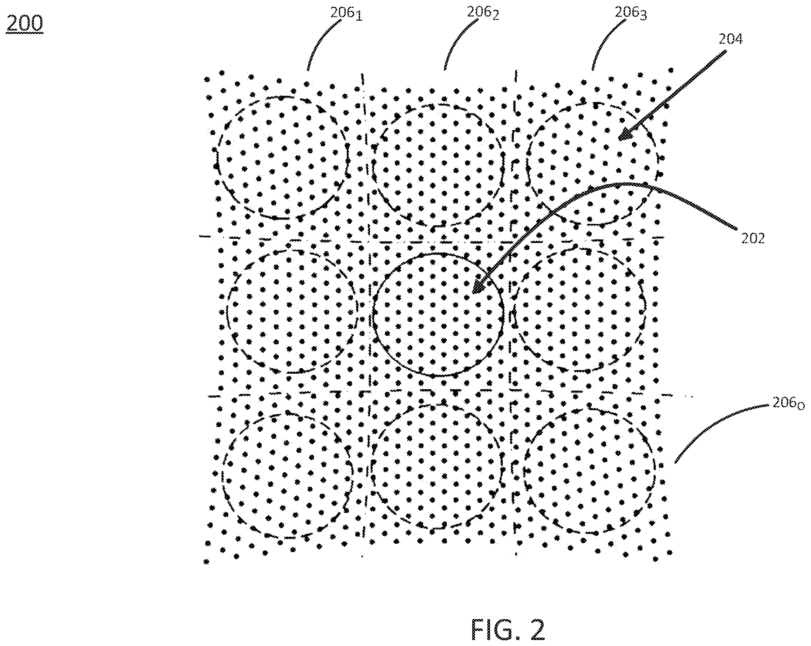

The result is a pattern of points of light that is projected onto a surface, where each point is formed as one of the plurality of beams is incident upon the surface. FIG. 2, for instance, illustrates a pattern 200 of light that may be formed by the light projecting system 100 of FIG. 1. As illustrated, the pattern 200 comprises a plurality of individual points 202 of light, which may be enlarged by the collimator function of the diffractive optical element 104. Each point 202 of light may be formed by one beam of the plurality of beams that exits the diffractive optical element 104. Moreover, each group of beams that is split from a single coherent beam of light (e.g., plurality of beams 112 split from coherent beam 110 of light) may form a sub-pattern 204 which may be repeated to form the pattern 200. That is, each coherent beam of light that is emitted by the emitter 102 may, once split, create an instance of the sub-pattern 204; thus, when all of the coherent beams of light emitted by the emitter 102 create respective instances of the sub-pattern 204 (such that the sub-pattern 204 is repeated across a plurality of respective sections 206₁-206ₒ of space), the pattern 200 results. Although the sub-pattern 204 that is replicated in each section 206 appears to exhibit a regular or repeating arrangement of points 202, it will be appreciated that the repeated sub-pattern 204 may in other examples exhibit an irregular or arbitrary arrangement of points 202.

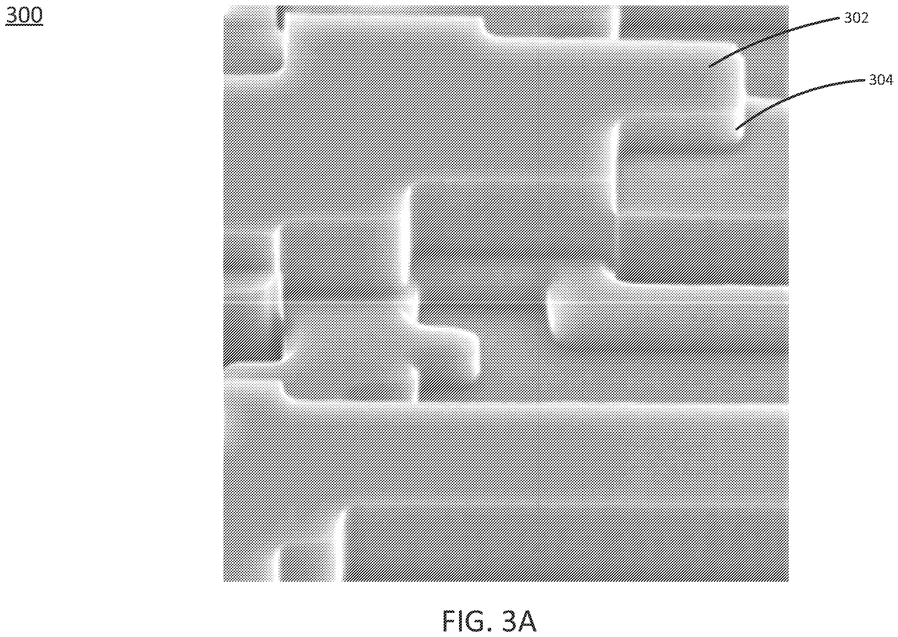

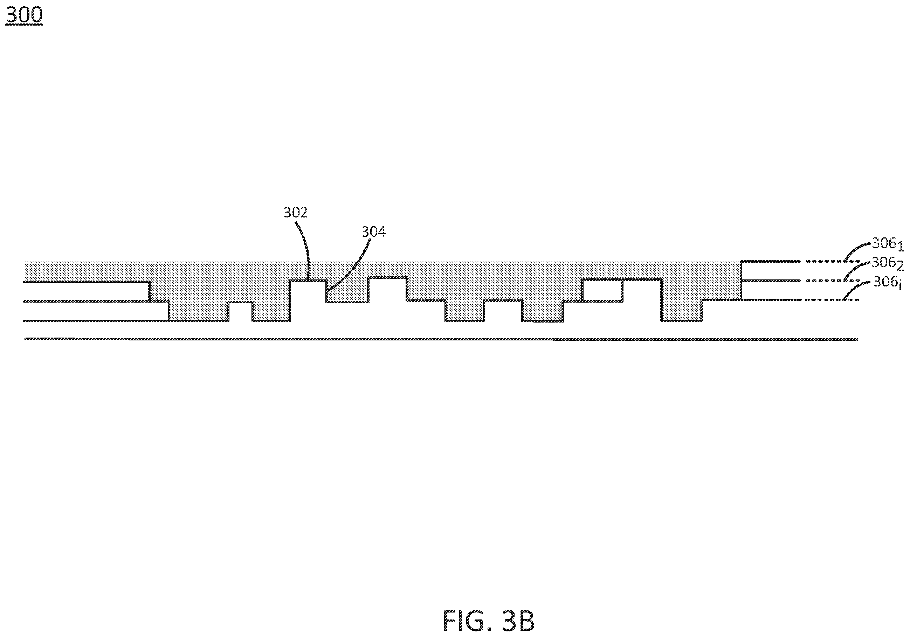

As discussed above, the diffractive optical element is designed not only to split beams of light that enter the diffractive optical element, but also to collimate the beams of light that are created by the splitting. FIG. 3A illustrates a photo of a portion of a surface 300 of an example diffractive optical element including a collimator function, according to the present disclosure. FIG. 3B illustrates a cross sectional view of the surface 300 of FIG. 3A. The example diffractive optical element may be the diffractive optical element 104 of FIG. 1.

As illustrated, the surface 300 of the diffractive optical element may be designed in one example to include an irregular pattern of binary steps. The irregular pattern of binary steps may be etched, for example, into a glass substrate. Each step may include a run (i.e., a planar, raised surface) and a rise (i.e., a height of the planar, raised surface) that is oriented at a substantially ninety degree angle relative to the run. In other words, the steps do not include sloped surfaces. FIGs. 3A and 3B, for instance, indicate a run 302 and a rise 304 for one of the plurality of steps of the surface 300.

The pattern created by the steps is irregular in the sense that different steps may have different sized and/or shaped runs, and different rises, as shown in FIGs. 3A and 3B. However, as illustrated, the runs of all of the steps are oriented substantially parallel to each other and parallel to a base of the surface 300, while the rises of all of the steps are also oriented substantially parallel to each other. Thus, although the runs and rises of all steps are oriented parallel to each other, they are not necessarily coplanar with each other (e.g. are coplanar with fewer than all of the other steps). Put another way, the surface of the diffractive optical element may comprise a plurality of (i.e., two or more) phase levels or layers 306₁-306ᵢ of binary steps. When viewed from above, the pattern on the diffractive optical element may resemble a series of concentric circles.

The pattern illustrated in FIGs. 3A and 3B is capable of both splitting a beam of coherent light into multiple beams and of collimating the multiple beams to control a spread angle. Thus, a diffractive optical element whose surface is designed to exhibit the pattern illustrated in FIGs. 3A and 3B may perform the functions of both a diffractive optical element and a collimator lens, but in a single component. In one example, the pattern illustrated in FIGs. 3A and 3B is formed in a surface if the diffractive optical element 104 that is facing the emitter 102.

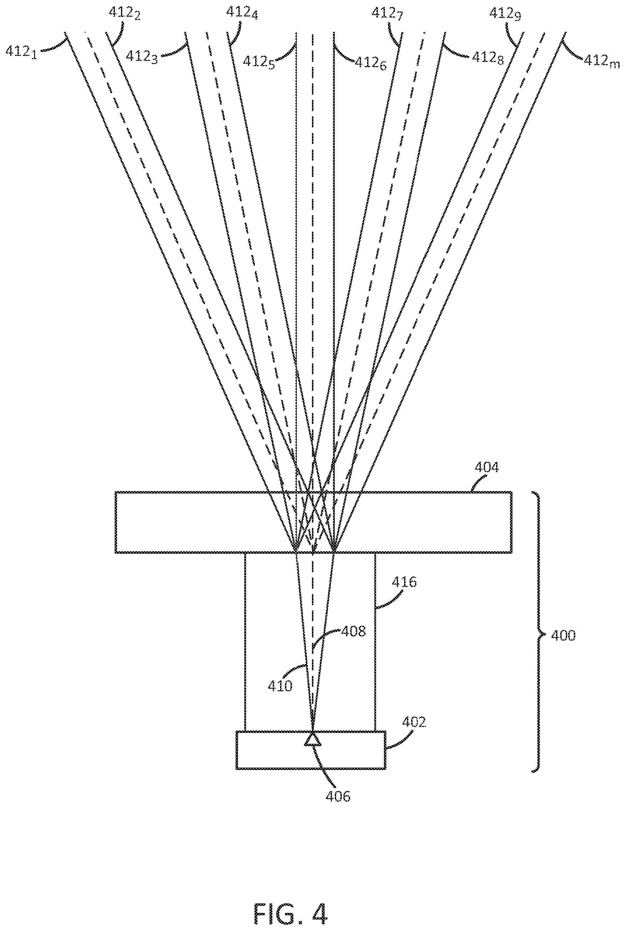

FIG. 4 is a schematic diagram illustrating the light projecting system 400 of another example distance sensor according to examples of the present disclosure. Like FIG. 1, FIG. 4 illustrates the portion of a distance sensor that projects a pattern of light from which distance can be calculated, but omits other components of the distance sensor such as a light receiving system and processor for capturing images of the pattern of light and calculating distance based on the images.

As shown in FIG. 4, the light projecting system 400 of the example distance sensor generally includes an emitter 402 and a diffractive optical element 404. In one example, the emitter 402 comprises a VCSEL emitter. However, unlike the emitter 101 of FIG. 1 which comprises an array of individual VCSEL emitters 106, the emitter 402 includes a single VCSEL emitter 406. The VCSEL emitter 406 may comprise a laser light source that is capable of emitting a beam of light in a wavelength that is invisible to the human eye, but visible to a light receiving system of the example distanced sensor (e.g., infrared light). FIG. 4 also illustrates, for the VCSEL emitter 406, a central light emitting axis 408. In addition, FIG. 4 illustrates a beam 410 of coherent light emitted from the VCSEL emitter 406.

The diffractive optical element 404 is positioned between the emitter 402 and an exit aperture (not shown) of the light projecting system 400 via which the emitted light exits the distance sensor. In addition, a positioning member 416 may be employed to maintain a strictly aligned positional relationship between the emitter 402 and the diffractive optical element 404

The diffractive optical element 404 includes a collimator function as described above. That is, in addition to splitting the beam 410 of coherent light emitted by the emitter 402 into a plurality of beams of light, the diffractive optical element 404 may also shape the plurality of beams of light to exhibit an arbitrary spread angle that is projected onto a surface.

For instance, as illustrated in FIG. 4, the beam 410 of coherent light may be emitted by the VCSEL emitter 406. When the beam 410 of coherent light enters the diffractive optical element 404, the diffractive optical element 404 will split the beam 410 of coherent light into a plurality of beams 412₁-412ₘ (hereinafter individually referred to as a "beam 412" or collectively referred to as "beams 412") of light. Furthermore, because the diffractive optical element 404 has been configured to perform a collimator function as well, the diffractive optical element 404 will shape the plurality of beams 412 to exhibit the arbitrary spread angle. In one example, shaping of the plurality of beams 412 by the diffractive optical element 404 may result in some of the beams 412 being oriented substantially parallel (i.e., parallel within some predefined tolerance) to each other. For instance, as illustrated in FIG. 4, beams 412₁ and 412₂ are parallel to each other; beams 412₃ and 412₄ are parallel to each other; beams 412₅ and 412₆ are parallel to each other; beams 412₇ and 412₈ are parallel to each other; and beams 412₉ and 412ₘ are parallel to each other.

A distance sensor of the present disclosure employing a diffractive optical element including a collimator function may be used in a variety of distance sensing schemes and applications. For instance, a pattern projected by the disclosed distance sensor may be used to calculate distance in accordance with triangulation using multipoint projection (e.g., in which distance is calculated from projection of a regular pattern of points such as a grid, a code pattern in which the points are arranged to form a code according to a specified rule, or a pseudo random pattern in which the regularity of the arrangement of points is minimized), time of flight using multipoint projection (e.g., in which the points of light are pulsed), stereo system using multipoint projection (e.g., as supporting means for feature detection), or triangular distance measurement (e.g., by projecting multiple stripes of light rather than points of light). Such a distance sensor may be incorporated into devices including mobile phones, personal computers, and other devices in which smaller form factors and lower manufacturing costs are desired.

Such a distance sensor may also be used in applications including facial authentication, gesture recognition, and three-dimensional recognition. The appropriate pattern for an application can be achieved by varying the arrangement and size of the emitter (e.g., number and arrangement of individual emitters in an array).

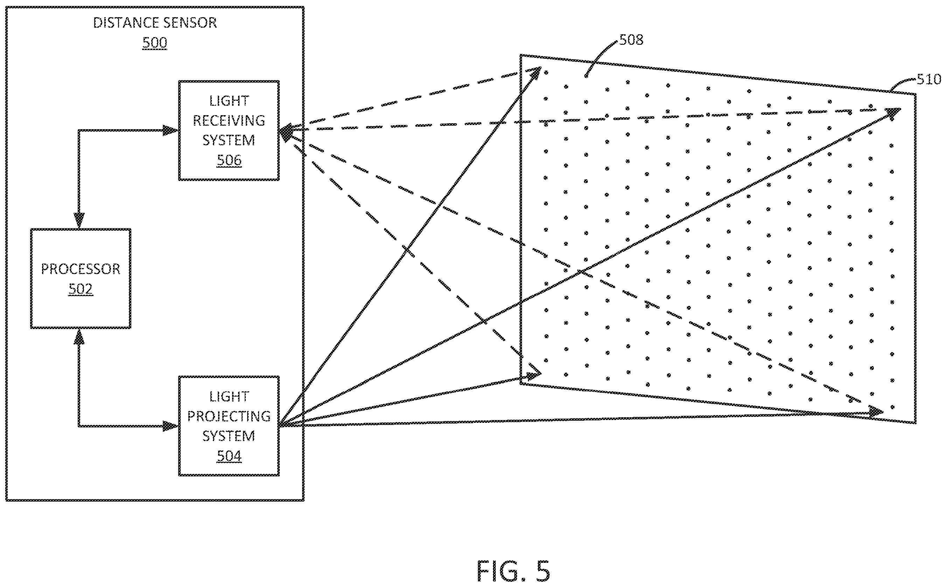

FIG. 5 is a simplified schematic drawing illustrating an example distance sensor 500 in which examples of the disclosed diffractive optical element including the collimator function may be employed. The distance sensor 500 generally comprises a processor 502, a light projecting system 504, and a light receiving system 506.

The processor 502 may comprise a hardware processor element 602 such as a central processing unit (CPU), a microprocessor, or a multi-core processor. The processor 502 may be configured to control operation of both the light projecting system 504 and the light receiving system 506 as described in further detail below.

The light projecting system may be configured in a manner similar to the light projecting systems illustrated in FIGs. 1 and 4 and discussed above. Thus, the light projecting system may include a laser light source (e.g., either a single emitter or an array of emitters) and a diffractive optical element including a collimator function that is patterned to both: (1) split a beam of coherent light emitted by the laser source into a plurality of beams of light; and (2) collimate the plurality of beams of light to control a divergence angle of the light emitted by the light projecting system 504. The diffractive optical element including the collimator function may also control a magnification of a projection pattern (i.e., an arrangement of points of light) 508 that is projected into a surface 510 by the light projecting system 504. The processor 502 may control the light projecting system 504 to project the pattern 508 (e.g., by sending signals that instruct the emitter(s) to emit light at specified times and/or for specified durations of time). Although the example pattern 508 illustrated in FIG. 5 exhibits a regular or repeating arrangement of points, it will be appreciated that the pattern 508 may in other examples exhibit an arbitrary or non-uniform (e.g., non-repeating) arrangement of points.

The light receiving system 506 may include an image sensor (e.g., camera) and other optics (e.g., filters) that capture an image of the pattern 508 projected onto the surface 510. As discussed above, the pattern 508 may be invisible to the human eye due to the wavelength of light emitted by the light projecting system 504, but may be visible to an appropriately configured image sensor (e.g., photodetector) of the light receiving system 506. The processor 502 may control the light receiving system 506 to capture images of the pattern (e.g., by sending signals that instruct the light receiving system to capture images at specified times). Images captured by the light receiving system 506 may be forwarded to the processor 502 for distance calculations.

The processor 502 may calculate the distance to the surface 510 based on the appearance of the pattern 508 in the images captured by the light receiving system 506. For instance, the processor 502 may store an image or known configuration of the pattern 508 and may compare the captured images to the stored image and/or known configuration to calculate the distance, for instance using triangulation, time of flight, or other techniques. For instance, the distance mat be calculated according to any of the methods described United States Patent Applications Serial Nos. 14/920,246, 15/149,323, and 15/149,429.

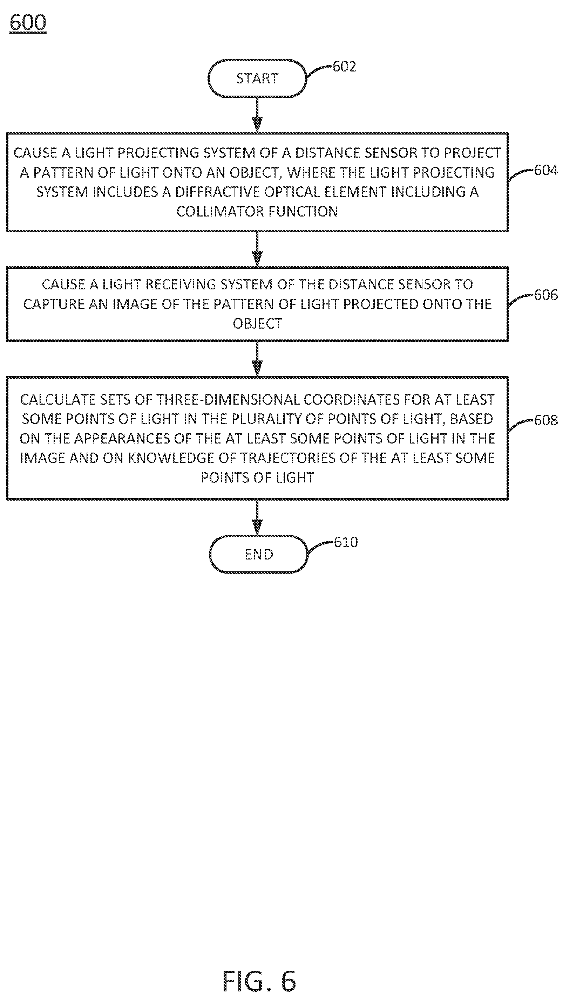

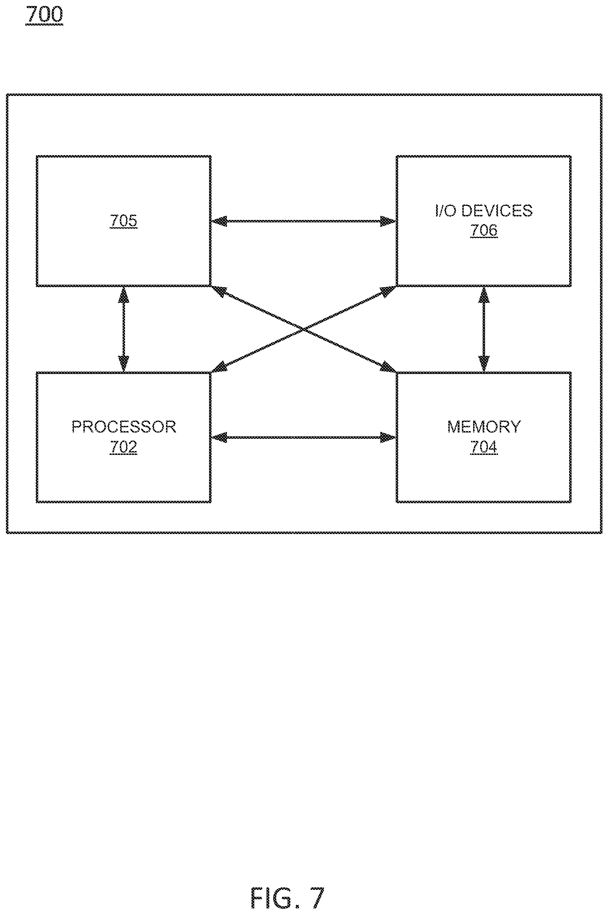

FIG. 6 is a flow chart illustrating an example method 600 for measuring the distance from a distance sensor to an object. The method 600 may be performed, for example, by a processing system including at least one processor, such as the processor 502 of the distance sensor 500 of FIG. 5. Alternatively, the method 600 may be performed by a processing system of a computing device, such as the computing device 700 illustrated in FIG. 7 and described in further detail below. For the sake of example, the method 600 is described as being performed by a processing system.

The method 600 may begin in step 602. In step 604, the processing system of a distance sensor may cause a light projecting system of the distance sensor to project a pattern of light onto an object, where the light projecting system includes a diffractive optical element including a collimator function. The light projecting system of the distance sensor may comprise, for example, a laser light source that emits one or more beams of light in a wavelength that is substantially invisible to the human eye (e.g., infrared light). The light projecting system of the distance sensor may additionally comprise a diffractive optical elements whose surface is patterned as described above (e.g., including a plurality of layers of a binary step pattern) to both: (1) split the beam(s) of light emitted by the laser light source into a plurality of additional beams of light; and (2) collimate the plurality of additional beams of light to control a spread angle and magnification of the pattern of light.

Thus, the light projecting system may project a plurality of beams of light. When each beam of the plurality of beams of light is incident upon an object, the beam creates a point of light (e.g., a dot or other shape) on the object. A plurality of points of light creates by the plurality of beams collectively forms a pattern of light on the object. The pattern of light may comprise a predefined arrangement of the plurality of points of light. For instance, the plurality of points of light may be arranged in a grid comprising a plurality of rows and a plurality of columns or may be arranged to form vertical or horizontal stripes.

In step 606, the processing system may cause a light receiving system of the distance sensor to capture an image of the pattern of light projected onto the object. As described above, the light receiving system of the distance sensor may comprise, for example, an imaging sensor and one or more lenses that collectively form a camera. The imaging sensor may include an array of photodetectors and optional filters that is capable of detecting the points of light of the pattern. For instance, the photodetectors may include infrared photodetectors, and the filters may include infrared bandpass filters.

In step 608, the processing system may calculate sets of three-dimensional coordinates for at least some points of light of the plurality of points of light, based on the appearances of the at least some points of light in the image and knowledge of trajectories of the at least some points of light. The set of three-dimensional coordinates for a point of light may comprise (x, y, z) coordinates, where the z coordinate may measure a distance (or depth) of the point from the distance sensor. The trajectory of the point may comprise a moving range within which the point's position may vary with the distance to the object. The trajectory of each point of the plurality of points of light may be learned, prior to performance of the method 600, through a calibration of the distance sensor.

The method 600 may then end in step 610.

It should be noted that although not explicitly specified, some of the blocks, functions, or operations of the method 600 described above may include storing, displaying and/or outputting for a particular application. In other words, any data, records, fields, and/or intermediate results discussed in the method 600 can be stored, displayed, and/or outputted to another device depending on the particular application. Furthermore, blocks, functions, or operations in FIG. 6 that recite a determining operation, or involve a decision, do not imply that both branches of the determining operation are practiced. In other words, one of the branches of the determining operation may not be performed, depending on the results of the determining operation.

FIG. 7 depicts a high-level block diagram of an example electronic device 700 for measuring the distance from a distance sensor to an object. As such, the electronic device 700 may be implemented as a processor of an electronic device or system, such as a distance sensor.

As depicted in FIG. 7, the electronic device 700 comprises a hardware processor element 702, e.g., a central processing unit (CPU), a microprocessor, or a multi-core processor, a memory 704, e.g., random access memory (RAM) and/or read only memory (ROM), a module 705 for measuring the distance from a distance sensor to an object, and various input/output devices 706, e.g., storage devices, including but not limited to, a tape drive, a floppy drive, a hard disk drive or a compact disk drive, a receiver, a transmitter, a display, an output port, an input port, and a user input device, such as a keyboard, a keypad, a mouse, a microphone, a camera, a laser light source, an LED light source, and the like.

Although one processor element is shown, it should be noted that the electronic device 700 may employ a plurality of processor elements. Furthermore, although one electronic device 700 is shown in the figure, if the method(s) as discussed above is implemented in a distributed or parallel manner for a particular illustrative example, i.e., the blocks of the above method(s) or the entire method(s) are implemented across multiple or parallel electronic devices, then the electronic device 700 of this figure is intended to represent each of those multiple electronic devices.

It should be noted that the present disclosure can be implemented by machine readable instructions and/or in a combination of machine readable instructions and hardware, e.g., using application specific integrated circuits (ASIC), a programmable logic array (PLA), including a field-programmable gate array (FPGA), or a state machine deployed on a hardware device, a general purpose computer or any other hardware equivalents, e.g., computer readable instructions pertaining to the method(s) discussed above can be used to configure a hardware processor to perform the blocks, functions and/or operations of the above disclosed method(s).

In one example, instructions and data for the present module or process 705 for measuring the distance from a distance sensor to an object, e.g., machine readable instructions can be loaded into memory 704 and executed by hardware processor element 702 to implement the blocks, functions or operations as discussed above in connection with the method 600. Furthermore, when a hardware processor executes instructions to perform "operations", this could include the hardware processor performing the operations directly and/or facilitating, directing, or cooperating with another hardware device or component, e.g., a co-processor and the like, to perform the operations.

The processor executing the machine readable instructions relating to the above described method(s) can be perceived as a programmed processor or a specialized processor. As such, the present module 705 measuring the distance from a distance sensor to an object of the present disclosure can be stored on a tangible or physical (broadly non-transitory) computer-readable storage device or medium, e.g., volatile memory, non-volatile memory, ROM memory, RAM memory, magnetic or optical drive, device or diskette and the like. More specifically, the computer-readable storage device may comprise any physical devices that provide the ability to store information such as data and/or instructions to be accessed by a processor or an electronic device such as a computer or a controller of a safety sensor system.

It will be appreciated that variants of the above-disclosed and other features and functions, may be combined into many other different systems or applications.

## Claims

1. A distance sensor (500), comprising:
a light projecting system (100; 400; 504) to project a pattern comprising a plurality of points of light onto an object, the light projecting system comprising:
a laser light source (106; 406) to project coherent light; and
a diffractive optical element (104; 404) having a plurality of layers (306₁-306ᵢ) that are etched to form binary step patterns, wherein each binary step pattern of the binary step patterns comprises an irregular arrangement of a plurality of steps, and each step of the plurality of steps comprises a rise (304) and run (302) without a slope, wherein at least two steps of the plurality of steps comprise different rises, wherein the plurality of layers is configured to split the coherent light into a plurality of beams of light, wherein each beam of light of the plurality of beams of light forms one point of the plurality of points of light, and wherein the plurality of layers is further configured to control divergence angles of the plurality of beams of light to collimate them;
a light receiving system (506) to capture an image of the pattern projected onto the object; and
a processor (502) to calculate a distance to the object based on an appearance of the pattern in the image and on knowledge of trajectories of the plurality of points of light.

2. The distance sensor of claim 1, wherein the laser light source (406) comprises a single vertical cavity surface emitting laser that emits a single beam of coherent light toward the diffractive optical element.

3. The distance sensor of claim 1, wherein the laser light source comprises a single edge emitting laser that emits a single beam of coherent light toward the diffractive optical element.

4. The distance sensor of claim 1, wherein the laser light source (106) comprises an array of a plurality of vertical cavity surface emitting lasers that collectively emits a plurality of beams of coherent light toward the diffractive optical element.

5. The distance sensor of claim 4, wherein the plurality of layers is further configured to enlarge the pattern.

6. The distance sensor of claim 1, wherein the run of each step of the plurality of steps is parallel with runs of other steps of the plurality of steps, but is coplanar with fewer than all of the runs of the other steps.

7. The distance sensor of claim 1, further comprising a positioning member (116) positioned to maintain an aligned positional relationship between the laser light source and the diffractive optical element, wherein the positioning member is comprised of a liquid crystal polymer.

8. The distance sensor of claim 1, wherein the plurality of layers is defined in a surface (300) of the diffractive optical element facing the laser light source.

9. The distance sensor of claim 1, wherein the coherent light comprises a wavelength of light that is invisible to a human eye, but is visible to a photodetector of the light receiving system.

10. The distance sensor of claim 1, wherein the plurality of beams of light forms a pattern (200; 508) of points that is repeated on the surface by other pluralities of beams of light split from the coherent light by the diffractive optical element.

11. The distance sensor of claim 10, wherein the pattern of points comprises a regular pattern.

12. The distance sensor of claim 10, wherein the pattern of points comprises an irregular pattern.

13. A method (600), comprising:
causing (604), by a processing system of a distance sensor (500) including at least one processor (502), a light projecting system (100; 400; 504) of the distance sensor to project a pattern (200; 508) onto an object, wherein the pattern comprises a plurality of points of light, and wherein the plurality of points of light is formed by a diffractive optical element (104; 404) of the light projecting system that includes a collimator function, wherein the diffractive optical element comprises a plurality of layers (306₁-306ᵢ) that are etched to form binary step patterns, wherein each binary step pattern of the binary step patterns comprises an irregular arrangement of a plurality of steps, and each step of the plurality of steps comprises a rise (304) and run (302) without a slope, wherein at least two steps of the plurality of steps comprise different rises, wherein the plurality of layers is configured to split coherent light emitted by a laser light source (106; 406) of the light processing system into a plurality of beams of light, wherein each beam of light of the plurality of beams of light forms one point of the plurality of points of light, and wherein the plurality of layers is further configured to control divergence angles of the plurality of beams of light to collimate them;
causing (606), by the processing system, a light receiving system (506) of the distance sensor to capture an image of the pattern projected onto the object; and
calculating (608), by the processing system, sets of three-dimensional coordinates for at least some points of the plurality of points of light, wherein the calculating is based on appearances of the at least some points in the image and knowledge of trajectories of the at least some points.

14. A non-transitory machine-readable storage medium encoded with instructions executable by a processing system of a distance sensor (100; 400; 504) including at least one processor (502), wherein, when executed by the processing system, the instructions cause the processing system to perform operations, the operations comprising:
causing (604) a light projecting system (100; 400; 504) of the distance sensor to project a pattern (200; 508) onto an object, wherein the pattern comprises a plurality of points of light, and wherein the plurality of points of light is formed by a diffractive optical element (104; 404) of the light projecting system that includes a collimator function, wherein the diffractive optical element comprises a plurality of layers (306₁-306ᵢ) that are etched to form binary step patterns, wherein each binary step pattern of the binary step patterns comprises an irregular arrangement of a plurality of steps, and each step of the plurality of steps comprises a rise (304) and run (302) without a slope, wherein at least two steps of the plurality of steps comprise different rises, wherein the plurality of layers is configured to split coherent light emitted by a laser light source of the light processing system into a plurality of beams of light, wherein each beam of light of the plurality of beams of light forms one point of the plurality of points of light, and wherein the plurality of layers is further configured to control divergence angles of the plurality of beams of light to collimate them;
causing (606) a light receiving system (506) of the distance sensor to capture an image of the pattern projected onto the object; and
calculating (608) sets of three-dimensional coordinates for at least some points of the plurality of points of light, wherein the calculating is based on appearances of the at least some points in the image and knowledge of trajectories of the at least some points.

## Patentansprüche

1. Abstandssensor (500), umfassend:
ein Lichtprojektionssystem (100; 400; 504) zum Projizieren eines Musters, das mehrere Lichtpunkte umfasst, auf ein Objekt, wobei das Lichtprojektionssystem Folgendes umfasst:
eine Laserlichtquelle (106; 406) zum Projizieren von kohärentem Licht; und
ein diffraktives optisches Element (104; 404), das mehrere Schichten (306₁-306ᵢ) aufweist, die so geätzt sind, dass sie binäre Stufenmuster bilden, wobei jedes binäre Stufenmuster der binären Stufenmuster eine unregelmäßige Anordnung mehrerer Stufen umfasst und jede Stufe der mehreren Stufen eine Steigung (304) und eine Breite (302) ohne Neigung umfasst, wobei mindestens zwei Stufen der mehreren Stufen unterschiedliche Steigungen aufweisen, wobei die mehreren Schichten so konfiguriert sind, dass sie das kohärente Licht in mehrere Lichtstrahlen aufspalten, wobei jeder Lichtstrahl der mehreren Lichtstrahlen einen Punkt der mehreren Lichtpunkte bildet, und wobei die mehreren Schichten ferner so konfiguriert sind, dass sie Divergenzwinkel der mehreren Lichtstrahlen steuern, um diese zu kollimieren;
ein Lichtempfangssystem (506) zum Aufnehmen eines Bilds des auf das Objekt projizierten Musters; und
einen Prozessor (502) zum Berechnen einer Distanz zum Objekt, basierend auf einer Erscheinung des Musters im Bild und einer Kenntnis über Trajektorien der mehreren Lichtpunkte.

2. Distanzsensor nach Anspruch 1, wobei die Laserlichtquelle (406) einen einzelnen Oberflächenemitter umfasst, der einen einzelnen Strahl kohärenten Lichts auf das diffraktive optische Element aussendet.

3. Distanzsensor nach Anspruch 1, wobei die Laserlichtquelle einen einzelnen Kantenemitter umfasst, der einen einzelnen Strahl kohärenten Lichts auf das diffraktive optische Element aussendet.

4. Distanzsensor nach Anspruch 1, wobei die Laserlichtquelle (106) ein Array von mehreren Oberflächenemittern umfasst, die gemeinsam mehrere Strahlen kohärenten Lichts auf das diffraktive optische Element aussenden.

5. Distanzsensor nach Anspruch 4, wobei die mehreren Schichten ferner so konfiguriert sind, dass sie das Muster vergrößern.

6. Distanzsensor nach Anspruch 1, wobei die Breite jeder Stufe der mehreren Stufen parallel zu Breiten anderer Stufen der mehreren Stufen verläuft, jedoch mit weniger als allen Breiten der anderen Stufen komplanar ist.

7. Distanzsensor nach Anspruch 1, ferner umfassend ein Positionierelement (116), das so positioniert ist, dass es eine ausgerichtete Positionsbeziehung zwischen der Laserlichtquelle und dem diffraktiven optischen Element aufrechterhält, wobei das Positionierelement ein Flüssigkristallpolymer umfasst.

8. Distanzsensor nach Anspruch 1, wobei die mehreren Schichten auf einer Oberfläche (300) des diffraktiven optischen Elements definiert sind, die der Laserlichtquelle zugewandt ist.

9. Distanzsensor nach Anspruch 1, wobei das kohärente Licht eine Wellenlänge umfasst, die für ein menschliches Auge unsichtbar ist, für einen Fotodetektor des Lichtempfangssystems jedoch sichtbar ist.

10. Distanzsensor nach Anspruch 1, wobei die mehreren Lichtstrahlen ein Muster (200; 508) von Punkten bilden, das auf der Oberfläche durch andere mehrere Lichtstrahlen wiederholt wird, die durch das diffraktive optische Element aus dem kohärenten Licht abgetrennt werden.

11. Distanzsensor nach Anspruch 10, wobei das Punktmuster ein regelmäßiges Muster umfasst.

12. Distanzsensor nach Anspruch 10, wobei das Punktmuster ein unregelmäßiges Muster umfasst.

13. Verfahren (600), umfassend:
Veranlassen (604), durch ein Verarbeitungssystem eines Distanzsensors (500), einschließlich mindestens eines Prozessors (502), eines Lichtprojektionssystem (100; 400; 504) des Abstandssensors, ein Muster (200; 508) auf ein Objekt zu projizieren, wobei das Muster mehrere Lichtpunkte umfasst, und wobei die mehreren Lichtpunkte durch ein diffraktives optisches Element (104; 404) des Lichtprojektionssystems gebildet werden, das eine Kollimatorfunktion einschließt, wobei das diffraktive optische Element mehrere Schichten (306₁-306ᵢ) umfasst, die geätzt werden, um binäre Stufenmuster zu bilden, wobei jedes binäre Stufenmuster der binären Stufenmuster eine unregelmäßige Anordnung mehrerer Stufen aufweist und jede Stufe eine Steigung (304) und eine Breite (302) ohne Neigung aufweist, wobei mindestens zwei Stufen der mehreren Stufen unterschiedliche Steigungen aufweisen, wobei die mehreren Schichten so konfiguriert sind, dass sie kohärentes Licht, das von einer Laserlichtquelle (106; 406) des Lichtverarbeitungssystems ausgestrahlt wird, in mehrere Lichtstrahlen aufteilen, wobei jeder Lichtstrahl der mehreren Lichtstrahlen einen Punkt der mehreren Lichtpunkte bildet und wobei die mehreren Schichten ferner so konfiguriert sind, dass sie Divergenzwinkel der mehreren Lichtstrahlen steuern, um diese zu kollimieren;
Veranlassen (606), durch das Verarbeitungssystem, eines Lichtempfangssystems (506) des Distanzsensors, ein Bild des auf das Objekt projizierten Musters aufzunehmen; und
Berechnen (608), durch das Verarbeitungssystem, von Sätzen dreidimensionaler Koordinaten für mindestens einige Punkte der mehreren Lichtpunkte, wobei das Berechnen auf Erscheinungen der mindestens einigen Punkte im Bild und einer Kenntnis über Trajektorien der mindestens einigen Punkte basiert.

14. Nichtflüchtiges, maschinenlesbares Speichermedium, das mit Anweisungen codiert ist, die von einem Verarbeitungssystem eines Distanzsensors (100; 400; 504), einschließlich mindestens eines Prozessors (502), ausgeführt werden können, wobei die Anweisungen, wenn sie von dem Verarbeitungssystem ausgeführt werden, das Verarbeitungssystem veranlassen, Operationen durchzuführen, wobei die Operationen Folgendes umfassen:
Veranlassen (604) eines Lichtprojektionssystem (100; 400; 504) des Abstandssensors, ein Muster (200; 508) auf ein Objekt zu projizieren, wobei das Muster mehrere Lichtpunkte umfasst, und wobei die mehreren Lichtpunkte durch ein diffraktives optisches Element (104; 404) des Lichtprojektionssystems gebildet werden, das eine Kollimatorfunktion einschließt, wobei das diffraktive optische Element mehrere Schichten (306₁-306ᵢ) umfasst, die geätzt werden, um binäre Stufenmuster zu bilden, wobei jedes binäre Stufenmuster der binären Stufenmuster eine unregelmäßige Anordnung mehrerer Stufen aufweist und jede Stufe eine Steigung (304) und eine Breite (302) ohne Neigung aufweist, wobei mindestens zwei Stufen der mehreren Stufen unterschiedliche Steigungen aufweisen, wobei die mehreren Schichten so konfiguriert sind, dass sie kohärentes Licht, das von einer Laserlichtquelle des Lichtverarbeitungssystems ausgestrahlt wird, in mehrere Lichtstrahlen aufteilen, wobei jeder Lichtstrahl der mehreren Lichtstrahlen einen Punkt der mehreren Lichtpunkte bildet und wobei die mehreren Schichten ferner so konfiguriert sind, dass sie Divergenzwinkel der mehreren Lichtstrahlen steuern, um diese zu kollimieren;
Veranlassen (606) eines Lichtempfangssystems (506) des Distanzsensors, ein Bild des auf das Objekt projizierten Musters aufzunehmen; und
Berechnen (608) von Sätzen dreidimensionaler Koordinaten für mindestens einige Punkte der mehreren Lichtpunkte, wobei das Berechnen auf Erscheinungen der mindestens einigen Punkte im Bild und einer Kenntnis über Trajektorien der mindestens einigen Punkte basiert.

## Revendications

1. Capteur de distance (500), comprenant :
un système de projection de lumière (100 ; 400 ; 504) destiné à projeter un motif comprenant une pluralité de points de lumière sur un objet, le système de projection de lumière comprenant :
une source de lumière laser (106; 406) pour projeter une lumière cohérente ; et
un élément optique diffractif (104 ; 404) présentant une pluralité de couches (306₁-306ᵢ) qui sont gravées pour former des motifs binaires en forme de marches, dans lequel chaque motif binaire en forme de marche des motifs binaires en forme de marches comprend un agencement irrégulier d'une pluralité de marches, chaque marche de la pluralité de marches comprenant une hauteur (304) et une profondeur (302) sans pente, dans lequel au moins deux marches de la pluralité de marches comprennent des hauteurs différentes, dans lequel la pluralité de couches est configurée pour diviser la lumière cohérente en une pluralité de faisceaux de lumière, dans lequel chaque faisceau de lumière de la pluralité de faisceaux de lumière forme un point de la pluralité de points de lumière, et dans lequel la pluralité de couches est en outre configurée pour commander des angles de divergence de la pluralité de faisceaux de lumière afin de les collimater ;
un système de réception de lumière (506) pour capturer une image du motif projeté sur l'objet ; et
un processeur (502) pour calculer une distance à l'objet sur la base d'un aspect du motif dans l'image et de la connaissance des trajectoires de la pluralité des points de lumière.

2. Capteur de distance selon la revendication 1, dans lequel la source de lumière laser (406) comprend un seul laser à cavité verticale et à émission par la surface qui émet un seul faisceau de lumière cohérente vers l'élément optique diffractif.

3. Capteur de distance selon la revendication 1, dans lequel la source de lumière laser comprend un seul laser à émission par la tranche qui émet un seul faisceau de lumière cohérente vers l'élément optique diffractif.

4. Capteur de distance selon la revendication 1, dans lequel la source de lumière laser (106) comprend un réseau d'une pluralité de lasers à cavité verticale et à émission par la surface qui émettent collectivement une pluralité de faisceaux de lumière cohérente vers l'élément optique diffractif.

5. Capteur de distance selon la revendication 4, dans lequel la pluralité de couches est en outre configurée pour agrandir le motif.

6. Capteur de distance selon la revendication 1, dans lequel la profondeur de chaque marche de la pluralité de marches est parallèle à des profondeurs d'autres marches de la pluralité de marches, mais est coplanaire avec moins de la totalité des profondeurs des autres marches.

7. Capteur de distance selon la revendication 1, comprenant en outre un élément de positionnement (116) positionné de manière à maintenir une relation de position alignée entre la source de lumière laser et l'élément optique diffractif, dans lequel l'élément de positionnement est composé d'un polymère à cristaux liquides.

8. Capteur de distance selon la revendication 1, dans lequel la pluralité de couches est définie dans une surface (300) de l'élément optique diffractif faisant face à la source de lumière laser.

9. Capteur de distance selon la revendication 1, dans lequel la lumière cohérente comprend une longueur d'onde de lumière qui est invisible pour l'œil humain, mais visible pour un photodétecteur du système de réception de lumière.

10. Capteur de distance selon la revendication 1, dans lequel la pluralité de faisceaux de lumière forme un motif (200 ; 508) de points qui est répété sur la surface par d'autres pluralités de faisceaux de lumière divisés à partir de la lumière cohérente par l'élément optique diffractif.

11. Capteur de distance selon la revendication 10, dans lequel le motif de points comprend un motif régulier.

12. Capteur de distance selon la revendication 10, dans lequel le motif de points comprend un motif irrégulier.

13. Procédé (600), comprenant les étapes consistant à :
amener (604), par un système de traitement d'un capteur de distance (500) incluant au moins un processeur (502), un système de projection de lumière (100 ; 400 ; 504) du capteur de distance à projeter un motif (200 ; 508) sur un objet, dans lequel le motif comprend une pluralité de points de lumière, et dans lequel la pluralité de points de lumière est formée par un élément optique diffractif (104 ; 404) du système de projection de lumière qui inclut une fonction de collimateur, dans lequel l'élément optique diffractif comprend une pluralité de couches (306₁-306ᵢ) qui sont gravées pour former des motifs binaires en forme de marches, dans lequel chaque motif binaire en forme de marche des motifs binaires en forme de marches comprend un agencement irrégulier d'une pluralité de marches, et chaque marche de la pluralité de marches comprend une hauteur (304) et une profondeur (302) sans pente, dans lequel au moins deux marches de la pluralité de marches présentent des hauteurs différentes, dans lequel la pluralité de couches est configurée pour diviser la lumière cohérente émise par une source de lumière laser (106 ; 406) du système de traitement de la lumière en une pluralité de faisceaux de lumière, dans lequel chaque faisceau de lumière de la pluralité de faisceaux de lumière forme un point de la pluralité de points de lumière, et dans lequel la pluralité de couches est en outre configurée pour commander des angles de divergence de la pluralité de faisceaux de lumière afin de les collimater ;
amener (606), par le système de traitement, un système de réception de lumière (506) du capteur de distance à capturer une image du motif projeté sur l'objet ; et
calculer (608), par le système de traitement, des ensembles de coordonnées tridimensionnelles pour au moins certains points de la pluralité de points de lumière, dans lequel le calcul est basé sur des aspects des au moins certains points dans l'image et sur la connaissance des trajectoires des au moins certains points.

14. Support de stockage non transitoire lisible par machine sur lequel sont encodées des instructions exécutables par un système de traitement d'un capteur de distance (100 ; 400 ; 504) incluant au moins un processeur (502), dans lequel, lorsqu'elles sont exécutées par le système de traitement, les instructions amènent le système de traitement à effectuer des opérations, les opérations consistant à :
amener (604) un système de projection de lumière (100 ; 400 ; 504) du capteur de distance à projeter un motif (200 ; 508) sur un objet, ce motif comprenant une pluralité de points de lumière, et dans lequel la pluralité de points de lumière est formée par un élément optique diffractif (104 ; 404) du système de projection de lumière qui inclut une fonction de collimateur, dans lequel l'élément optique diffractif comprend une pluralité de couches (306₁-306ᵢ) qui sont gravées pour former des motifs binaires en forme de marches, dans lequel chaque motif binaire en forme de marche des motifs binaires en forme de marches comprend un agencement irrégulier d'une pluralité de marches, et chaque marche de la pluralité de marches présente une hauteur (304) et une profondeur (302) sans pente, dans lequel au moins deux marches de la pluralité de marches présentent des hauteurs différentes, dans lequel la pluralité de couches est configurée pour diviser la lumière cohérente émise par une source de lumière laser du système de traitement de la lumière en une pluralité de faisceaux de lumière, dans lequel chaque faisceau de lumière de la pluralité de faisceaux de lumière forme un point parmi la pluralité de points de lumière, et dans lequel la pluralité de couches est en outre configurée pour commander des angles de divergence de la pluralité de faisceaux de lumière afin de les collimater ;
amener (606) un système de réception de lumière (506) du capteur de distance à capturer une image du motif projeté sur l'objet ; et
calculer (608) des ensembles de coordonnées tridimensionnelles pour au moins certains points de la pluralité de points de lumière, dans lequel le calcul est basé sur des aspects des au moins certains points dans l'image et la connaissance des trajectoires des au moins certains points.
